Europäisches Patentamt

European Patent Office

Office européen des brevets

(19)

(11) Veröffentlichungsnummer: **0 075 352**
**B1**

(12) **EUROPÄISCHE PATENTSCHRIFT**

(45) Veröffentlichungstag der Patentschrift:
27.03.85

(51) Int. Cl.⁴: **C 05 D 9/02**

(21) Anmeldenummer: 82201105.2

(22) Anmeldetag: 07.09.82

(54) Feste, wasserlösliche Spurennährstoff-Mischungen, ihre Herstellung und Verwendung.

(30) Priorität: 12.09.81 DE 3136164

(43) Veröffentlichungstag der Anmeldung:
30.03.83 Patentblatt 83/13

(45) Bekanntmachung des Hinweises auf die Patenterteilung:
27.03.85 Patentblatt 85/13

(84) Benannte Vertragsstaaten:
AT BE CH DE FR GB IT LI LU NL SE

(56) Entgegenhaltungen:
EP - B - 0 006 411
DE - A - 2 846 832
FR - A - 2 222 331
FR - A - 2 278 655
US - A - 3 711 525
US - A - 3 898 070
US - A - 4 026 694
US - A - 4 046 793

(73) Patentinhaber: CHEMISCHE WERKE HÜLS AG,
Postfach 1320, D-4370 Marl 1 (DE)
Patentinhaber: RUHR-STICKSTOFF
AKTIENGESELLSCHAFT, Königsallee 21,
D-4630 Bochum 1 (DE)

(72) Erfinder: Algner, Heinrich, Dr., Am Silberknapp 15,
D-4408 Dülmen (DE)
Erfinder: Norden, Jürgen, Somborner Strasse 97,
D-4630 Bochum (DE)
Erfinder: Merget, Norbert, Dr., Kulmer Strasse 12,
D-4630 Bochum (DE)
Erfinder: Schweppe, Manfred, Oberwegstrasse 34,
D-4690 Herne 1 (DE)
Erfinder: Wetter, Klaus, Dr., Kotthaushang 5,
D-4300 Essen (DE)

(74) Vertreter: Stell, Hanna, Dipl.-Chem., RSP PATENTE -
PB 15 Postfach 1320, D-4370 Marl 1 (DE)

0 075 352

**Beschreibung**

Die Erfindung betrifft feste, wasserlösliche Salzgemische aus Spurennährstoffen und Stabilisatoren, Verfahren zu ihrer Herstellung und ihre Verwendung in wäßriger Verdünnung zur Versorgung von Kulturpflanzen mit Spurenelement-Nährstoffen, insbesondere zur Blattdüngung.

Wasserlösliche Spurenelement-Düngemittel sind bisher in fester (z. B. DE-C-2 313 921) oder in flüssiger Form, insbesondere als wäßrige Lösungen (z. B. DE-A-2 434 875 oder EP-A-0 006 411) oder in pastöser Form (z. B. DE-B-2 846 832) bekannt.

Diese Spurennährstoff-Konzentrate werden im allgemeinen vor ihrer Verwendung mit Wasser verdünnt oder in diesem gelöst.

Bei den pastösen Spurennährstoff-Konzentraten ist unter Umständen die Handhabung unbefriedigend.

Die flüssigen Spurennährstoff-Düngemittel haben den Nachteil, daß sie große Mengen Ballaststoffe, insbesondere Wasser, enthalten. Dies erschwert die Handhabung, und es entstehen unnötige Verpackungs- und Transportkosten. Gelegentlich treten auch beim Lagern Ausfällungen auf.

Zum In-Lösung-halten der Spurennährstoffe in den Konzentraten und ihren Lösungen werden deshalb üblicherweise komplexbildende Verbindungen, insbesondere Chelatbildner, zugesetzt (vgl. z. B. den 2. Band »Boden und Düngemittel«, zweite Hälfte, Seiten 1352—1354 des Handbuches »Pflanzenernährung und Düngung«, herausgegeben von H. Linser, Springer Verlag, Wien, New York, 1968).

Die Verbindungen dieser Stoffgruppe werden sowohl in Form der freien Säure als auch als Salze, insbesondere der Alkalien, eingesetzt.

Obwohl gewöhnlich so gearbeitet wird, daß nur ein Teil der zur vollständigen Komplexierung der vorhandenen Kationen erforderlichen Mengen eingesetzt wird, z. B. »mindestens 20% der in der Mischung vorkommenden zwei- und dreiwertigen Kationen, vorzugsweise jedoch 40%« und mehr (vgl. DE-C-2 313 921, Spalte 3, Zeilen 15 bis 20 und Tabelle der Beispiele 1 bis 7 in den Spalten 3/4, insbesondere die letzte Zeile) oder mindestens 25% (gemäß DE-B-2 846 832, Spalte 1, Zeile 8), erscheint die Vermeidung der Anwendung derart hoher Mengen wünschenswert, da chemische Verbindungen mit derart gezielt wirkenden Eigenschaften, z. B. durch Aktivierung von Schwermetallen im Boden problematisch sein könnten. Zudem ist der Zusatz der Komplexierungsmittel in hohem Maße kostenwirksam.

Gemäß DE-B-2 846 832 wird deshalb an Komplexierungsmittel nur so viel eingesetzt, daß mindestens 25% der Spurenelement-Kationen komplexiert sind, zusätzlich aber 2—18 Gew.-% Polyglykolätherderivate. Auch bezüglich der Polyglykolätherderivate sprechen allgemeine Erwägungen im Hinblick auf Umweltbelastung und wirtschaftliche Gründe für einen möglichst sparsamen Einsatz.

Aufgabe der Erfindung war es daher, diese den bisher bekannten Spurennährstoff-Konzentraten anhaftenden Mängel zu beheben.

Diese verbesserten Konzentrate sollten insbesondere in fester und lagerfähiger Form herstellbar sein, bei der Überführung in Lösung sich rasch und vollständig in Wasser lösen, die damit hergestellten Lösungen sollten lagerstabil sein und unter Einsatz möglichst geringer Mengen von Stoffen hergestellt werden können, die die Umwelt oder die Wirtschaftlichkeit belasten könnten.

Beim Herstellen und Lagern dieser Konzentrate sollten keine Schwierigkeiten infolge möglichen Kristallwasseraustausches bei erhöhten Temperaturen auftreten, der zu einem Flüssigwerden der Mischung führen könnte.

Für die Verwendung als Düngemittel, insbesondere als Blattdünger sollten die eingesetzten Spurennährstoffe in einer Form vorliegen und darin beständig bleiben, in der sie leicht von den Kulturpflanzen aufgenommen werden können.

Bezüglich der Zusammensetzung sollten spezielle Bedürfnisse einzelner Gruppen von Kulturpflanzen besonders berücksichtigt werden, ohne jedoch durch eine Überspezialisierung die Spurennährstoff-Konzentrate unnötig zu verteuern.

Schließlich sollten die Liefermengen so abgepackt werden, daß sie dem Verbraucher eine bequeme Handhabung gestatten.

Die Lösung dieser Einzelprobleme bei der Verbesserug der Spurennährstoff-Konzentrate gelang überraschenderweise durch eine Reihe von Maßnahmen, von denen einige bekannt, andere neu, und erst infolge ihrer Kombination zu überraschenden Fortschritten führten.

Gegenstand der Erfindung sind daher feste, wasserlösliche Salzgemische zur Versorgung von Kulturpflanzen aus Spurennährstoffen und Stabilisierungszusätzen, gekennzeichnet durch einen Gehalt von 80 bis 90 Gew.-% an wasserlöslichen Salzen der Spurennährstoffe, deren Kationen zu 10—18 Mol-% mit N-Alkylaminocarbonsäureverbindungen komplexiert sind, 7,75—19,2 Gew.-% des Komplexierungsmittels, 0,75—1,75 Gew.-% an Stabilisatoren auf Basis fester, wasserlöslicher Polyalkylenoxide mit einer Mahlfeinheit von 80—90 Gew.-% < 0,1 mm und weniger als 0,5 Gew.-% > 0,5 mm und gegebenenfalls 0,05—0,5 Gew.-% oberflächenaktiver Substanzen.

Die Spurennährstoffe werden vorzugsweise in Form ihrer Sulfate -- außer Molybdän und Bor — eingesetzt. Sie können einen hohen Kristallwassergehalt besitzen.

Für einige Kulturen ist ein erhöhter Borgehalt, für andere ein erhöhter Mangangehalt von 2 bis 6 Gew.-% besonders geeignet.

Als Komplexbildner werden, wie bereits bekannt, N-Alkylaminocarbonsäureverbindungen einge

2

setzt, jedoch konnte die Menge so reduziert werden, daß nur 10 bis 18% der Kationen der Spurennähr stoffe komplexiert werden müssen. Als Chelatbildner kommen in Frage Verbindungen der

Nitrilotriessigsäure (NTA)
Ethylendiaminotetraessigsäure (EDTA)
Diethylentriaminopentaessigsäure (DTPA)
Hydroxyethylethylendiaminotriessigsäure (HEEDTH)
Cyclohexan-1,2-Diaminotetraessigsäure (CDTA)

Als besonders geeignet erwiesen hat sich das Dinatriumsalz der Ethylendiaminotetraessigsäure

$$Na_2H_2[NC_2H_4(CH_2COO)_4]_n \quad (= Na_2EDTA),$$

das im Gegensatz zur freien Säure gut wasserlöslich ist, aber noch keine Verschiebung in den alkalischen Bereich wie bei der Verwendung von $Na_4$ EDTA hervorruft.

Zum Stabilisierungsgemisch gehören außerdem wasserlösliche Polyalkylenoxide, insbesondere Polyethylenoxide. Als optimale Verbindung aus dieser Klasse, aus der Einzelglieder in DE-B-2 846 832 beschrieben sind, hat sich ein Polyethylenglykol mit einem mittleren Molekulargewicht von 5000 bis 7000 g/mol und einem Erstarrungspunkt von 55 bis 58° C bewährt. Diese Verbindung wird im folgenden als Polywachs bezeichnet.

Während man für Spurennährstoff-Konzentrate bei Einsatz von 14,5 bis 15,0 Gew.-% $Na_2$ EDTA zunächst noch mindestens 2,5 Gew.-% des Polywachses benötigte, war es nach entsprechender Aufmahlung möglich, diese Mengen auf 1,5 und sogar unter 1,0 Gew.-% zu senken.

Bei einer noch höheren Feinheit dürften noch niedrigere Polywachsgehalte zulässig sein.

Durch diese Aufmahlung gelangt man also zusätzlich überraschenderweise zu einer entscheidenden Verbesserung in bezug auf die Anwendung von Polywachs.

Eine weitere Verbesserung in bezug auf das Lösungsvermögen konnte durch den Zusatz von oberflächenaktiven Substanzen erzielt werden.

Dafür geeignete Tenside sind beispielsweise anionische Tenside wie Schwefelsäureester, Alkylsulfonate, Alkylarylsulfonate und Phosphorsäureester sowie nicht ionische Tenside vom Typ Alkylpolyglykolether sowie Alkylphenolpolyglykoläther und Fettsäurepolyglykolester.

Weiterer Gegenstand der Erfindung ist ein Verfahren zur Herstellung des festen Salzgemisches nach den Ansprüchen 1—5, dadurch gekennzeichnet, daß man die Stabilisatoren mit einer Mahlfeinheit von 80—90 Gew.-% < 0,1 mm und weniger als 0,5 Gew.-% > 0,5 mm einsetzt und mit anderen Komponenten, gegebenenfalls nach Vormahlung derselben und gegebenenfalls nach Kühlung unter 30° C, innig vermischt und anschließend sofort in Gebinden abpackt.

Schließlich ist auch Gegenstand der Erfindung die Verwendung der Salzgemische nach den Ansprüchen 1 bis 6 in einer Verdünnung von 1 : 50 bis 600, vorzugsweise von 1 : 200 mit Wasser, dem gegebenenfalls Makronährstoffe, Pflanzenschutzmittel oder andere Wirkstoffe zugesetzt sind.

Die Salzgemische sind als Blattdünger besonders geeignet. Mit höherem Borgehalt dienen sie insbesondere zur Düngung von Raps oder Rüben, mit höherem Mangangehalt zur Düngung von Getreide, Mais und Kartoffeln.


Allgemeine Angaben zur Herstellung der Spurennährstoff-Konzentrate

Bei den ersten Versuchen wurden die Einzelkomponenten in beliebiger Reihenfolge in ein Mahlwerk gegeben, darin gemischt und schließlich ausgetragen. Dabei kam es zur Bildung von wäßrigen Pasten. Daraufhin wurde ein einfacher Mischer, d. h. ein Apparat praktisch ohne jeden Mahleffekt, eingesetzt. Außer bei der Vermischung an sehr heißen Tagen trat keine Verflüssigung mehr ein. Die weitere Verbesserung brachte der Zusatz des vor Vermischung feinst aufgemahlenen Polywachses. Derartige Salzgemische blieben praktisch als fein-kristallines Gemisch unverändert.

Als Verbindungen der Spurennährstoffe wurden durchweg die Sulfate eingesetzt, und zwar möglichst diejenigen mit dem bei Raumtemperatur beständigen höchsten Kristallwassergehalt. Diese Produkte sollen in nicht zu grober Körnung eingesetzt werden. Jedoch ist nicht bei allen Salzen eine Feinstaufmahlung erforderlich. Lediglich das $Na_2$-EDTA und vor allem das Polywachs sollte stets in Feinstaufmahlung verwendet werden.

Bei der Benutzung einer Mühle zum Vermischen trat offensichtlich eine Erwärmung auf. Dadurch wird der Kristallwasseraustausch begünstigt, und es kommt zu pastösen bis wäßrigen Mischungen; d. h. bei Verwendung eines Mischgerätes mit mahlenden Eigenschaften müssen also entweder die Einzelkomponenten vorher gekühlt werden oder es muß ein entsprechend kühlbares Mahlaggregat eingesetzt werden.

Als maximal zulässige Temperatur während des Mischvorganges haben sich 30° C erwiesen. Günstiger ist natürlich, wenn man bei möglichst tiefen Temperaturen arbeitet.

Nach erfolgter Vermischung werden die Spurennährstoff-Konzentrate sofort in Beuteln aus Poly-

3

äthylen oder ähnlich geeigneten Materialien abgepackt.

Bei Lagerung dieser Beutel tritt gelegentlich ein Verbacken der Ware auf.

Eine derartige Probe muß vor der Auflösung in Wasser jedoch nicht gemörsert werden. Setzt man das verbackene Muster der jeweils vorgesehenen Lösung bzw. dem Wasser zu, so ist die Lösegeschwindigkeit nur unwesentlich erhöht, da in den wäßrigen Lösungen praktisch sofort ein Zerfall auftritt, zumal wenn die Behälter der Spritzvorrichtung mit Rührwerken ausgestattet sind.

Zum Gebrauch sind die Spurennährstoff-Konzentrate in Lösung zu bringen. Dazu werden gewöhnlich 1 : 200 Verdünnungen hergestellt, je nach den verwendeten Spritzgeräten und der damit erzielbaren Genauigkeit der gleichmäßigen Verteilung sind jedoch auch Verdünnungen in weniger oder in mehr Lösungsmittel möglich z. B. im Verhältnis 1 : 50 oder auch bis zu 1 : 600.

So hergestellte Spritzbrühen enthalten i. a. 1 kg Spurennährstoff-Konzentrat pro 200 l Wasser, haben einen pH-Wert von 3,2, sind grünlich gefärbt und völlig klar. Auch nach 72 Stunden Standzeit bei Raumtemperatur tritt keinerlei Trübung auf.

Dem Verdünnungswasser können auch andere lösliche Stoffe zugesetzt werden, z. B. eine Ammoniumnitrat-Harnstoff-Lösung entsprechend 28 Gew.-% N oder eine Flüssigdüngermischung entsprechend einem NPK-Gehalt von 12 : 4 : 6. Diese Lösungen werden jeweils in Mengen von 10 Litern pro 200 Liter Wasser verteilt.

Die so durch Auflösen von 1 kg Spurennährstoff-Konzentrat und 10 l Ammoniumnitrat-Harnstoff-Lösung mit 28% N in 200 l Wasser hergestellte Spritzbrühe war grünlich gefärbt, hatten einen pH-Wert von 3,4 und war auch noch nach 72 Stunden bei Raumtemperatur völlig klar.

Die zur Herstellung der Spritzbrühen eingesetzten NPK-12 : 4 : 6-Lösungen hatten pH-Werte von 2,4 bis 2,8. Die durch Mischen dieser Lösungen mit Spurennährstoff-Konzentrat und Wasser angesetzten Spritzbrühen waren ebenfalls grünlich gefärbt, völlig klar und blieben es auch bei einer Standzeit von 72 Stunden bei Zimmertemperatur.

Bei weiteren Löseversuchen wurden Mischungen der entsprechenden Flüssigdünger und der Spurennährstoff-Konzentrate in den oben angegebenen Mengen durch Zusatz von Wasser mit Härtegraden von 6,4°, 9,6°, 19,2°, 30,0° und 38,4° dH hergestellt. Die Einstellung der Härte erfolgte dabei durch Zugabe von 15,8 mg wasserfreiem Calciumchlorid und 7,2 mg $MgCl_2 \cdot 6 H_2O$ zu einem Liter voll entsalztem Wasser pro 1° dH. Die Lösungen waren klar und wiesen nach 3-wöchigem Stehen bei Raumtemperatur weder Ausfällungen noch Auskristallisationen auf.

Bei den Untersuchungen mit Zusatz von Ammoniumnitrat-Harnstoff-Lösungen mit 28% N und NPK-Lösungen mit einem Nährstoffgehalt von 12 : 4 : 6 wurden die Spurennährstoff-Zusätze auch auf 5 kg Konzentrat pro 200 Liter Wasser erhöht. Dabei zeigten sich diese Mischungen auch nach 1-wöchiger Standzeit keine Veränderung:

Spurennährstoff-Konzentrate:

| Zusammensetzung I | | | |
|---|---|---|---|
| 472,3 g | $MgSO_4 \times 7 H_2O$ | $\hat{=}$ 7,72% | MgO |
| 172,0 g | $H_3BO_3$ | $\hat{=}$ 3,0% | B |
| 61,6 g | $MnSO_4 \times H_2O$ | $\hat{=}$ 2,0% | Mn |
| 39,3 g | $CuSO_4 \times 5 H_2O$ | $\hat{=}$ 1,0% | Cu |
| 44,0 g | $ZnSO_4 \times 7 H_2O$ | $\hat{=}$ 1,0% | Zn |
| 49,8 g | $FeSO_4 \times 7 H_2O$ | $\hat{=}$ 1,0% | Fe |
| 145,0 g | $Na_2EDTA$ | $\hat{=}$ 14,5% | |
| 15,0 g | Polywachs | $\hat{=}$ 1,5% | |
| 1,0 g | Marlon A® | $\hat{=}$ 0,1% | |

| Zusammensetzung II | | | |
|---|---|---|---|
| 580,5 g | $MgSO_4 \times 7 H_2O$ | $\hat{=}$ 9,14% | MgO |
| 17,2 g | $H_3BO_3$ | $\hat{=}$ 0,3% | B |
| 123,2 g | $MnSO_4 \times H_2O$ | $\hat{=}$ 4,0% | Mn |
| 39,3 g | $CuSO_4 \times 5 H_2O$ | $\hat{=}$ 1,0% | Cu |
| 44,0 g | $ZnSO_4 \times 7 H_2O$ | $\hat{=}$ 1,0% | Zn |
| 49,8 g | $FeSO_4 \times 7 H_2O$ | $\hat{=}$ 1,0% | Fe |
| 150,0 g | $Na_2$-EDTA | $\hat{=}$ 15,0% | |
| 15,0 g | Polywachs | $\hat{=}$ 1,5% | |
| 1,0 g | Marlon A® | $\hat{=}$ 0,1% | |

| Zusammensetzung III | | | |
|---|---|---|---|
| 478,3 g | $MgSO_4 \times 7 H_2O$ | $\hat{=}$ 7,82% | MgO |
| 172,0 g | $H_3BO_3$ | $\hat{=}$ 3,0% | B |
| 61,6 g | $MnSO_4 \times H_2O$ | $\hat{=}$ 2,0% | Mn |
| 39,3 g | $CuSO_4 \times 5 H_2O$ | $\hat{=}$ 1,0% | Cu |
| 44,0 g | $ZnSO_4 \times 7 H_2O$ | $\hat{=}$ 1,0% | Zn |
| 49,8 g | $FeSO_4 \times 7 H_2O$ | $\hat{=}$ 1,0% | Fe |
| 145,0 g | $Na_2$-EDTA | $\hat{=}$ 14,5% | |
| 10,0 g | Polywachs | $\hat{=}$ 1,0% | |

Zusammensetzung IV

| 566,5 g | $MgSO_4 \times 7\,H_2O$ | ≙ | 9,28% | MgO |
|---|---|---|---|---|
| 17,2 g | $H_3BO_3$ | ≙ | 0,3% | B |
| 123,2 g | $MnSO_4 \times H_2O$ | ≙ | 4,0% | Mn |
| 39,3 g | $CuSO_4 \times 5\,H_2O$ | ≙ | 1,0% | Cu |
| 44,0 g | $ZnSO_4 \times 7\,H_2O$ | ≙ | 1,0% | Zn |
| 49,8 g | $FeSO_4 \times 7\,H_2O$ | ≙ | 1,0% | Fe |
| 150,0 g | $Na_2$-EDTA | ≙ | 15,0% | |
| 10,0 g | Polywachs | ≙ | 1,0% | |

Marlon A® ist ein Alkylarylsulfonat der CHEMISCHE WERKE HÜLS AG

## Herstellungsbeispiel

Die vorstehend in ihrer Zusammensetzung beschriebenen erfindungsgemäßen Spurennährstoff-Konzentrate I bis IV wurden wie folgt hergestellt:

Die zur Herstellung von 25 kg-Chargen benötigten Salzmengen — i. a. handelsübliche Qualität, technisch rein — wurden mit Ausnahme des Polywachses und des Tensids ohne weitere Vorbehandlung in einen wassergekühlten 130 Liter-Loedige-Mischer mit Messerkopf gegeben. Polywachs und Tensid wurden per Hand vorgemischt und in einer Stiftmühle mit Kühlung auf die gewünschte Mahlfeinheit aufgemahlen.

Eine Siebanalyse ergab einen Anteil von 82,5 Gew.-% < 0,1 mm und 0,28 Gew.-% > 0,5 mm.

Nach Zugabe dieser beiden Komponenten in den Loedige-Mischer wurde bei laufendem Messerkopf so lange gemischt — ca. 10 Minuten —, bis die gewünschte Durchmischung erreicht war.

Um die durch Messerkopf und Mischwerkzeuge eingeführte Reibungswärme abzuführen, wurde die Wasserkühlung so einreguliert, daß die Produkttemperatur nicht über 27° C anstieg.

Die so erhaltenen Produkte waren trocken, freifließend und von blau-grünlicher Farbe.

Charakteristische Eigenschaften der so erhaltenen Produkte sind in der folgenden Tabelle aufgeführt.

Tabelle 1

Eigenschaften der Spurennährstoff-Konzentrate

| | Konzentrat I | Konzentrat II |
|---|---|---|
| Schüttdichte, kg/l | 0,48 | 0,63 |
| Siebanalyse, Gew.-% | | |
| > 0,250 mm | 2,0 | 3,1 |
| 0,125—0,250 mm | 14,3 | 16,7 |
| 0,063—0,125 mm | 22,0 | 26,9 |
| 0,032—0,063 mm | 28,2 | 25,3 |
| < 0,032 mm | 33,5 | 28,0 |
| $H_2O$-Gehalt (Fischer), Gew.-% | 44,0 | 36,0 |
| CRH-Wert (30° C) % rel. Feuchte | 77 | 77 |

## Biologische Wirksamkeit der Spurennährstoff-Konzentrate

Bekanntlich konnten die Spurennährstoffe erst ihre Bedeutung erlangen, als es analytisch möglich war, derart geringe Mengen im Boden bzw. in Pflanzen und bei Tier und Mensch nachzuweisen, um aus den jeweils vorliegenden Zahlen und aufgetretenen Mangelerscheinungen auf eine entsprechende Unterversorgung mit den betreffenden Spurennährstoffen zu schließen. Bei Stoffen mit verschiedenen Wertigkeiten, z. B. Eisen und Mangan spielt außerdem eine Rolle, ob das betreffende Element auch in einer für die Pflanzen aufnehmbarer Form vorliegt.

Am häufigsten fehlen von den eigentlichen Spurenelementen Mangan, Bor, Kupfer, Eisen und Zink. Gelegentlich wird auch Mangel an Kobalt, Molybdän und/oder Nickel festgestellt. Magnesium wird i. a. nicht zu den Spurenelementen gerechnet, vielmehr ist es ein Pflanzennährstoff, der in relativ großen Mengen von den Kulturpflanzen benötigt wird, so daß gerade häufig davon ein Mangel entsteht. Wegen der Häufigkeit von Magnesium-Chlorosen soll daher im folgenden auch MgO als Spurennährstoff bezeichnet werden.

Um zu einem Spurennährstoff-Konzentrat zu gelangen, das möglichst von sehr vielen Abnehmern verwendet werden kann, wurden die Auswahl der in dem erfindungsgemäßen Nährstoff-Konzentrat einzusetzenden Elemente so getroffen, daß die hauptsächlich fehlenden Stoffe zugeführt werden. Selbstverständlich kann man beim Auftauchen eines akuten Mangels an weiteren Spurennährstoffen diese ebenfalls zusetzen.

Abgesehen von Bor — und dem gewöhnlich nicht eingesetzten Molybdän — hat es sich als vorteilhaft erwiesen, alle Spurennährstoffe in Form ihrer Sulfate zu verwenden. Am günstigsten sind dabei diejenigen Sulfate, die den bei Raumtemperatur höchstmöglichen Kristallwassergehalt besitzen.

Aufgrund dieser Überlegungen und aufgrund des durchschnittlichen Bedarfs der Kulturpflanzen an den einzelnen Spurennährstoffen ergibt sich für die erfindungsgemäßen Spurennährstoff-Konzentrate folgende Auswahl:

| Spurennährstoff | vorzugsweise verwendete Verbindung | vorzugsweise angewendete Menge |
|---|---|---|
| Magnesium | $MgSO_4 \cdot 7 H_2O$ | 6—10 Gew.-% MgO |
| Mangan | $MnSO_4 \cdot H_2O$ | 1,5—6 Gew.-% Mn |
| Bor | $H_3BO_3$ | 0—6 Gew.-% B |
| Kupfer | $CuSO_4 \cdot 5 H_2O$ | 0—2 Gew.-% Cu |
| Eisen | $FeSO_4 \cdot 7 H_2O$ | 0—2 Gew.-% Fe |
| Zink | $ZnSO_4 \cdot 7 H_2O$ | 0—2 Gew.-% Zn |

Bei den verschiedenen Pflanzenkulturen ergibt sich für die einzelnen Nährstoffe ein unterschiedlicher Bedarf. So ist die Unterversorgung von Raps und Rüben bei Bor relativ hoch, während die mit Mangan zu vernachlässigen ist.

Andererseits haben Getreide, Mais oder Kartoffeln einen relativ hohen Manganbedarf, benötigen jedoch nicht allzuviel Bor.

Unter diesem Gesichtspunkt wurden für Rüben oder Raps Spurennährstoff-Konzentrate entwickelt (entsprechend den Spurennährstoff-Konzentraten I, III, die neben den übrigen Spurenelementen 2 bis 6 Gew.-% B und nur etwa 2 Gew.-% Mn enthalten).

Für Getreide, Mais oder Kartoffeln wurden Spurennährstoff-Konzentrate II, IV entwickelt, die neben den übrigen Bestandteilen 2 bis 6 Gew.-% Mn und weniger als 0,5 Gew.-% B enthalten.

Die Ergebnisse der biologischen Prüfung des Konzentrates II sind in der Tabelle 2 zusammengestellt.

Die Ergebnisse zeigen, daß der überwiegende Teil der geprüften Wintergerstesorten mit z. T. erheblichen Ertragsverbesserungen auf die Zugabe der erfindungsgemäßen Spurennährstoff-Konzentrate reagiert.

Die Randbedingungen waren wie folgt:

Boden:

Anlehmiger Sand, mit Nährstoffen ausreichend versorgt, m. A. von Mangan, das an der unteren Versorgungsgrenze lag.

6

# 0 075 352

Düngungsmaßnahmen

| Anwendungszeitpunkt | Aufwandmenge | Düngersorte |
|---|---|---|
| im Frühjahr | 60 + 40 kg/ha N | Ammonnitrat-Harnstoff-Lösung mit 28 Gew.-% N |
| zum Schossen | 30 kg/ha N | |
| Spätdüngung | 60 kg/ha N | |
| vor der Saat | 120 kg/ha $P_2O_5$ | als Thomasphosphat |
| vor der Saat | 160 kg/ha $K_2O$ | als 40er-Kornkali mit 5% MgO |

Pflanzenschutzmaßnahmen

| Anwendungszeitpunkt | Aufwandmenge | Pflanzenschutzmittel (Wirkstoff) |
|---|---|---|
| vor Auflauf | 1,75 kg/ha | 2-Ethylamino-4-tert.butylamino-6-methylthio-1,3,5-triazin |
| Ende der Bestockung | 2,40 kg/ha | 2-(2,4-Dichlorphenoxy)-propionsäure |
| Einknoten-Stadium | 0,07 kg/ha | $\alpha$-(2,4-Dichlorphenyl)-$\alpha$-phenyl-$\alpha$(pyrimidin (5))-methanol |
| | 0,18 | 2-(Methoxyl-carbonylamino)-benzimidazol |
| Sichtbarwerden der Grannenspitzen | 0,48 kg/ha | 2-Chlorethanphosphonsäureester |

Die Applikation des Spurennährstoff-Konzentrates II erfolgte beim Sichtbarwerden der Grannenspitzen in Form einer 1 : 200-Verdünnung mit Wasser.

7

Tabelle 2

Prüfung des Spurenelement-Konzentrates II bei verschiedenen Wintergerstesorten in Verbindung mit Wasser 1 : 200

| Sorten | Kornerträge dt/ha (86% TS) | | Ertragsveränderungen | |
|--------|----------------------------|--|----------------------|--|
| | ohne Blattdünger | mit Blattdünger GMK | dt/ha | % |
| Augusta | 80,9 | 82,8 | +1,9 | +2,3 |
| Banteng | 71,8 | 71,6 | —0,2 | —0,3 |
| Birgit | 74,7 | 79,0 | +4,3 | +5,8 |
| Bollo | 74,2 | 81,4 | +7,2 | +9,7 |
| Doris | 76,7 | 81,6 | +4,9 | +6,4 |
| Dura | 75,0 | 79,0 | +4,0 | +5,3 |
| Franka | 76,8 | 80,2 | +3,4 | +4,4 |
| Gerbel | 84,8 | 84,4 | —0,4 | —0,5 |
| Igri | 75,2 | 78,4 | +3,2 | +4,3 |
| Mammut | 84,3 | 86,0 | +1,7 | +2,0 |
| Marko | 84,0 | 82,8 | —1,2 | —1,4 |
| Tapir | 81,9 | 87,8 | +5,9 | +7,2 |
| Vogelsanger Gold | 76,1 | 77,2 | +1,1 | +1,5 |
| Durchschnittsertrag | 78,2 | 80,9 | +2,7 | +3,5 |

**Patentansprüche**

1. Feste, wasserlösliche Salzgemische zur Versorgung von Kulturpflanzen aus Spurennährstoffen und Stabilisierungszusätzen, gekennzeichnet durch einen Gehalt von 80 bis 90 Gew.-% an wasserlöslichen Salzen der Spurennährstoffe, deren Kationen zu 10 –18 Mol-% mit N-Alkylaminocarbonsäureverbindungen komplexiert sind, 7,75 – 19,2 Gew.-% des Komplexierungsmittels, 0,75 – 1,75 Gew.-% an Stabilisatoren auf Basis fester, wasserlöslicher Polyalkylenoxide mit einer Mahlfeinheit von 80—90 Gew.-% < 0,1 mm und weniger als 0,5 Gew.-% > 0,5 mm und gegebenenfalls 0,05 –0,5 Gew.-% oberflächenaktiver Substanzen.

2. Feste, wasserlösliche Salzgemische nach Anspruch 1, dadurch gekennzeichnet, daß als Stabilisatoren Polyethylenoxide eingesetzt werden.

3. Feste, wasserlösliche Salzgemische nach Anspruch 1 und 2, dadurch gekennzeichnet, daß als Komplexierungsmittel das Dinatriumsalz der Ethylendiamintetraessigsäure verwendet wird.

4. Feste, wasserlösliche Salzgemische nach den Ansprüchen 1 bis 3, gekennzeichnet durch einen Gehalt an 2 bis 6 Gew.-% Bor.

5. Feste, wasserlösliche Salzgemische nach den Ansprüchen 1 bis 3, gekennzeichnet durch einen Gehalt an 2 bis 6 Gew.-% Mangan.

6. Verfahren zur Herstellung der festen Salzgemische nach den Ansprüchen 1 bis 5, dadurch gekennzeichnet, daß man die Stabilisatoren in einer Mahlfeinheit von 80 –90 Gew.-% < 0,1 mm und weniger als 0,5 Gew.-% > 0,5 mm einsetzt und mit anderen Komponenten, gegebenenfalls nach Vormahlung derselben und gegebenenfalls nach Kühlung unter 30°C, innig vermischt und anschließend sofort in Gebinden abpackt.

7. Verwendung der Salzgemische nach den Ansprüchen 1 bis 6 als Düngemittel in einer Verdünnung von 1 : 50 bis 600, vorzugsweise 1 : 200 mit Wasser, dem gegebenenfalls Makronährstoffe, Pflanzenschutzmittel oder andere Wirkstoffe zugesetzt sind.

**0 075 352**

8. Verwendung der Salzgemische nach den Ansprüchen 1 bis 4 und 6 bis 7 als Blattdünger für Raps oder Rüben.

9. Verwendung der Salzgemische nach den Ansprüchen 1 bis 3 und 5 bis 7 als Blattdünger für Getreide, Mais oder Kartoffeln.

## Claims

1. Solid, water-soluble salt mixtures for feeding crop plants, the mixtures consisting of trace nutrients and stabiliser additives, characterised in that they contain 80 to 90% by weight, of water-soluble salts of the trace nutrients, the cations of which are complexed to the extent of 10—18 mole % with N-alkylaminocarboxylic acid compounds, 7.75—19.2% by weight of the complexing agent, 0.75—1.75% by weight of stabilisers based on solid, water-soluble polyalkylene oxides milled to a fineness of 80—90% by weight < 0.1 mm and less than 0.5% by weight > 0.5 mm, and, optionally, 0.05—0.5% by weight of surfactants.

2. Solid, water-soluble salt mixtures according to Claim 1, characterised in that polyethylene oxides are employed as stabilisers.

3. Solid, water-soluble salt mixtures according to Claim 1 and 2, characterised in that the disodium salt of ethylenediaminetetraacetic acid is used as the complexing agent.

4. Solid, water-soluble salt mixtures according to Claims 1 to 3, characterised in that they contain 2 to 6% by weight of boron.

5. Solid, water-soluble salt mixtures according to Claims 1 to 3, characterised in that they contain 2 to 6% by weight of manganese.

6. Process for the preparation of solid salt mixtures according to Claims 1 to 5, characterised in that the stabilisers are employed in a form in which they have been milled to a fineness of 80—90% by weight < 0.1 mm and less than 0.5% by weight > 0.5 mm, are intimately mixed with the other components, where appropiate after these have been pre-milled and where appropriate after cooling to below 30°C, and subsequent to mixing are immediately packaged in containers.

7. Use of the salt mixtures according to Claims 1 to 6 as fertilisers in a dilution of 1 : 50 to 600, preferably 1 : 200, with water, to which macro-nutrients, plant protection agents or other active ingredients are optionally added.

8. Use of the salt mixtures according to Claims 1 to 4 and 6 to 7 as leaf fertiliser for rape or beet.

9. Use of the salt mixtures according to Claims 1 to 3 and 5 to 7 as leaf fertilisers for cereals, maize or potatoes.

## Revendications

1. Mélanges de sels solides, solubles dans l'eau, pour l'alimentation des plantes cultivées avec des oligo-éléments et des stabilisants, mélanges caractérisé en ce qu'ils contiennent 80 à 90% en poids de sels solubles d'oligo-éléments, dont les cations sont complexés dans une proportion de 10 à 18% molaire avec des composés d'acides N-alcoylaminocarboxyliques, 7,75 à 19,2% en poids de complexant, 0,75—1,75% en poids de stabilisants à base d'oxyde de polyalcoylène solide, soluble dans l'eau, ayant une finesse de grain de 80 à 90% en poids < 0,1 mm et moins de 0,5% en poids > 0,5 mm, et éventuellement 0,05 à 0,5% en poids de composés tensioactifs.

2. Mélanges selon la revendication 1, caractérisés en ce que comme stabilisant on utilise des oxydes de polyéthylène.

3. Mélanges selon les revendications 1 et 2, caractérisés en ce que comme complexant on utilise le sel disodique de l'acide éthylenediamine-tétracétique.

4. Mélanges selon les revendications 1 à 3, caractérisés par une teneur en bore de 2 à 6% en poids.

5. Mélanges selon les revendications 1 à 3, caractérisés par une teneur en manganèse de 2 à 6% en poids.

6. Procédé d'obtention des mélanges salins solides selon les revendications 1 à 5, caractérisé en ce que le stabilisant est utilisé avec une finesse de 80 à 90% en poids < 0,1 mm et moins de 0,5% en poids > 0,5 mm, et qu'il est mélangé intimement avec d'autres composants, éventuellement après broyage préalable de ces derniers, et éventuellement après refroidissement en-dessous de 30°C, et qu'ensuite il est aussitôt emballé en fûts métalliques.

7. Utilisation des mélanges de sels selon les revendications 1 à 6, comme engrais, dans une dilution de 1 : 50 à 600, de préférence 1 : 200 avec de l'eau, éventuellement additionnée d'engrais macrolytiques, d'agents phytosanitaires ou d'autres matières actives.

8. Utilisation des mélanges de sels selon les revendications 1 à 4 et 6 à 7, comme engrais foliaire pour le colza ou la betterave.

9. Utilisation des mélanges de sels selon les revendications 1 à 3 et 5 à 7, comme engrais foliaire pour le blé, le maïs ou les pommes de terre.